Europäisches Patentamt

(19) European Patent Office

Office européen des brevets

(11) Numéro de publication : **0 336 809 B1**

(12) **FASCICULE DE BREVET EUROPEEN**

(45) Date de publication du fascicule du brevet :
**31.07.91 Bulletin 91/31**

(51) Int. Cl.⁵ : **B61D 17/22, B62D 47/02, B61D 1/06**

(21) Numéro de dépôt : **89400780.6**

(22) Date de dépôt : **21.03.89**

(54) **Membrane déformable pour tunnel d'intercirculation entre véhicules successifs ferroviaires ou routiers.**

(30) Priorité : **25.03.88 FR 8803979**

(43) Date de publication de la demande :
**11.10.89 Bulletin 89/41**

(45) Mention de la délivrance du brevet :
**31.07.91 Bulletin 91/31**

(84) Etats contractants désignés :
**BE DE ES FR GB IT SE**

(56) Documents cités :
**FR-A- 695 534
FR-A- 2 599 695
GB-A- 446 003
GB-A- 771 511
GB-A- 2 122 956
US-A- 4 257 645**

(73) Titulaire : **CAOUTCHOUC MANUFACTURE ET PLASTIQUES**
**143bis, rue Yves le Coz**
**F-78005 Versailles (FR)**
Titulaire : **FAIVELEY ENTREPRISES**
**93, rue du Docteur-Bauer**
**F-93407 Saint-Ouen Cedex (FR)**

(72) Inventeur : **Bechu, Jean-Pierre**
**20 ter, rue de Bezons**
**F-92400 Courbevoie (FR)**
Inventeur : **Cathala, Jacques**
**Les Vallées**
**F-37510 Ballan-Mire (FR)**
Inventeur : **Evanot, Jean-Pierre**
**185, rue de Grenelle**
**F-75007 Paris (FR)**
Inventeur : **Wanneroy, Roland**
**66 Boulevard A. Blanqui**
**F-75013 Paris (FR)**

## Description

La présente invention concerne un dispositif permettant l'intercirculation entre véhicules successifs, ferroviaires ou routiers, grâce à une membrane élastiquement déformable en forme de soufflet entourant totalement le passage libre, dans le prolongement des parois de deux véhicules affectés au transport de passagers ou de véhicules accompagnés.

Un soufflet est couramment réalisé à base de tissu caoutchouté replié en accordéon. Un des premiers soufflets de ce type est décrit dans le document FR-A-695 534 de Sébille. Une telle membrane était montée, en position de service, sous allongement par déploiement des plis, pour permettre de grands débattements entre deux véhicules, ce qui avait pour inconvénient de faire travailler les plis de l'accordéon en extension, obliquement par rapport aux faces d'appui, induisant, de ce fait, une fatigue des matériaux constitutifs. Lorsqu'un tel soufflet présente de grandes dimensions, différents artifices cherchant à lui conserver un caractère autoporteur ont été proposés, notamment par HUBNER-GUMMI UND KUNSTSTOFFE, dans son brevet FR-A-2.348.829, par la formation de plis supplémentaires dans les angles et par la TAURUS GUMMIIPARI, dans son brevet FR-A-2.529.836, décrivant un soufflet, éventuellement moulé, à épaisseur différente dans les côtes et au fond des ondes. De même, HUBNER décrit, dans le certificat d'utilité FR-A-2.333.657, la possibilité d'un composite multicouches apportant isolation phonique ou thermique et la TAURUS, dans son brevet FR-A-2.328.141, utilise un tel complexe comme autoporteur, par une variation de la largeur des ondes planes, raccordées alternativement par leurs bords extérieurs et intérieurs.

Par ailleurs, FAIVELEY, dans son brevet FR-A-2.496.030, puis la S.I.G., dans son brevet FR-A-2-568-195, décrivent un dispositif de passage, fermé de tous côtés, avec un cadre central supporté par un attelage ou par des bras et relié à l'intérieur des véhicules par une membrane déformable dont la définition n'est pas précisée. S-I-G- déclare en particulier (page 2, lignes 5 à 18) que ce dispositif nécessite "des membranes venues de moulage, ondulées, épaisses, élastiques", douées de propriétés d'isolation et d'une faible inflammabilité. FAIVELEY, dans les revendications 25 et 27 du brevet précité déclare cette membrane "déformable ou plissée".

La même société FAIVELEY, dans son brevet FR-A-2.573.714, décrit un couloir d'intercirculation, équipé d'une ou deux parties d'enveloppe raccordant un cadre aux extrémités des véhicules de transport en commun, à passage libre d'un véhicule à l'autre.

L'art antérieur exprime bien un besoin de telles membranes, mais ne décrit pas encore de technique susceptible de satisfaire correctement les exigences contradictoires de souplesse et de caractère autoporteur, la protection thermique, acoustique et la protection contre le souffle dû à la vitesse, tout en permettant une fabrication industrielle assez économique, en masse et en coût.

Dans une autre voie, Caoutchouc Manufacturé et Plastiques propose, par son brevet EP 0.206.910, un tunnel d'intercirculation de section cylindrique, à paroi autoportante et déformable dans son ensemble, de réalisation monobloc qui assure toutes les fonctions de ces dispositifs de passage, mais réduit par rapport à la pleine section des véhicules du fait de sa raideur. On citera, également de C.M.P. dans sa demande de brevet européen de joint tubulaire pour anneau rigide d'intercirculation 87.400784-2 la liaison en roulis entre les caisses, qui pourrait également s'appliquer au précédent tunnel.

La présente invention a pour objectif d'apporter une solution aux besoins de membranes permettant une liaison continue entre deux véhicules consécutifs, quasiment sans réduction de la section de passage, permettant une protection des passagers et des véhicules contre le bruit et les intempéries, ladite membrane présentant un caractère économique par un mode de fabrication et un montage simples.

La membrane élastiquement déformable pour intercirculation entre véhicules successifs, ferroviaires ou routiers, destinée à assurer une section de passage maximale dans le prolongement des parois desdits véhicules est constituée d'une surface ondulée, formée d'anneaux parallèles, liée aux véhicules attelés par des brides de fixation.

La membrane élastiquement déformable, objet de l'invention est caractérisée en ce que :

— elle présente, à l'état libre, une section sensiblement sinusoïdale,

— elle est partiellement comprimée, lors de la mise en place, entre deux plans d'appui sur les faces d'extrémité des véhicules attelés, de manière à ce que les parties planes de la paroi demeurent, en service, sensiblement parallèles auxdits plans d'appui ;

La membrane élastiquement déformable selon l'invention présente les autres caractéristiques suivantes :

— sa section transversale est constituée d'éléments rectilignes verticaux et horizontaux haut et bas, reliés par des parties courbes non développables et par des éléments rectilignes obliques,

— elle présente une forme monobloc, sa paroi, d'épaisseur sensiblement constante, étant constituée, dans les éléments rectilignes verticaux, d'au moins deux plis croisés de renforcement textile ou métallique, continu ou discontinu, intimement liés à une composition élastomérique de formulation adaptée — afin de permettre à ladite membrane de supporter, sans artifice mécanique, son propre poids — et, dans les parties courbes non développables de raccordement entre lesdits éléments rectilignes, d'au moins deux couches de compositions élastomériques sans renforcement textile ou métallique, afin que ladite membrane puisse admettre les déformations maximales.

Ladite membrane assure la protection des passagers et des véhicules contre les intempéries, les projections, le souffle dû à la vitesse et les bruits et enferme l'attelage, les tampons et les planchers d'intercirculation. Elle relie élastiquement la suspension des véhicules en roulis comme en débattement, surtout vertical, dans la limite des besoins rencontrés en métros articulés ou en navettes de transport de véhicules accompagnés.

Les caractéristiques et avantages de l'invention seront mieux compris à la lecture de la description accompagnant les dessins dans lesquels :

— la figure 1 est une vue générale de côté situant la membrane par rapport aux véhicules ;

— la figure 2 est une vue axiale à travers les véhicules définissant l'encombrement à dégager ;

— la figure 3 est la section droite de la membrane, lorsque les véhicules sont alignés ;

— la figure 4 est la même section de la membrane à l'état libre ou lorsque les véhicules sont désaccouplés, par exemple ;

— la figure 5 est la même section lorsque la membrane est étirée au maximum entre les véhicules par une courbure de trajectoire ;

— la figure 6 est la même section lorsque la membrane est comprimée au maximum entre les véhicules à l'intérieur de la courbure de trajectoire ;

— la figure 7 montre, en vue latérale, une dénivellation maximale entre deux véhicules successifs;

— la figure 8 est une coupe, agrandie par rapport à la figure 2, montrant la liaison, par un soufflet déformable, de la membrane au plancher.

Pour simplifier l'exposé de l'invention, on définira les différents éléments constitutifs de la membrane élastiquement déformable comme suit :

— "les éléments rectilignes" désigneront l'ensemble des parties de la membrane élastiquement déformable, engendré par une translation rectiligne de la section sensiblement sinusoïdale ;

— "les parties courbes" désigneront l'ensemble des parties de la membrane élastiquement déformable, engendré par la rotation autour d'un axe parallèle à l'axe des véhicules, de cette même section sensiblement sinusoïdale ;

— "la partie plane de la paroi" désignera la face verticale engendrée par une génératrice rectiligne, située entre une "onde extérieure" et une "onde intérieure" ;

— "l'onde intérieure" désignera une section, dans un plan transversal au véhicule, comprise entre deux parties planes de la paroi et concave vers l'extérieur du véhicule ; elle présente donc deux rayons de courbure différents et opposés dans les parties courbes ;

— "l'onde extérieure" désignera une fraction de paroi transversale au véhicule, comprise entre deux parties planes de la paroi et convexe vers l'extérieur du véhicule ; elle présente donc, en chaque point, deux rayons de courbure différents et de même sens dans les parties courbes. Ces ondes présentent une courbure constante de leur section, aussi bien dans les éléments rectilignes que dans les parties courbes.

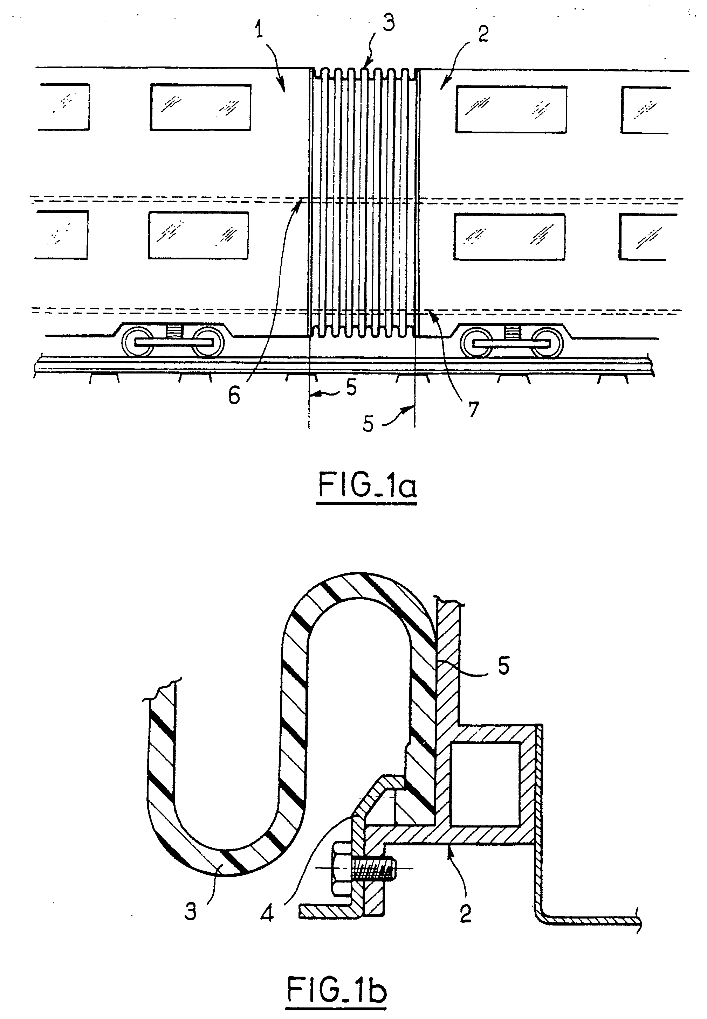

La figure 1 est une vue générale de côté représentant les extrémités de deux véhicules consécutifs, accouplés en permanence (1) et (2). Est représenté, ici, le problème le plus difficile à résoudre, de véhicules à deux étages tels que les navettes destinées au transport de véhicules accompagnés, dans le tunnel sous la Manche, par exemple. Un problème identique se trouve à résoudre dans les rames de type métro urbain, les tramways, ou les autobus articulés, où la disposition pourra être identique à une échelle différente.

La vue 1a montre une membrane élastiquement déformable (3), qui assure la liaison entre les caisses des véhicules (1) et (2), auxquelles elle est reliée, par exemple par boulonnage de brides de fixation (4), contre leurs faces planes (5). D'autres dispositions pourront être rencontrées, où deux membranes déformables de même type relient les faces extrêmes de véhicules consécutifs à un cadre intermédiaire ou une nacelle portée par des moyens appropriés. Dans tous les cas, l'encombrement des ondes extérieures de la membrane élastiquement déformable (3) suit, au plus près, le contour du gabarit des véhicules, y compris vers le bas, enfermant les dispositifs d'attelage et de traction qui devront être manoeuvrables par d'autres accès. Un cache ou volet (non représenté), améliorant l'aérodynamique, peut recouvrir ou même être partie intégrante de la bride de fixation (4) de la membrane élastiquement déformable (3). Des planchers continus (6) et (7) assurent le prolongement des planchers des véhicules par une déformabilité appropriée et sont donc également enfermés par la membrane (3), qui constitue un écran continu et étanche aux bruits, poussières et intempéries, ainsi qu'au souffle provoqué par la vitesse, par exemple lors des croisements de trains, grâce à sa rigidité propre qui assure également son caractère autoportant.

La vue 1b est une coupe agrandie de cette zone de fixation sur l'un des véhicules.

La membrane élastiquement déformable (3) est pincée mécaniquement sur le plan d'appui (5), entre la bride de fixation (4) et la face plane du véhicule (2) un talon permettant le positionnement sur celle-ci.

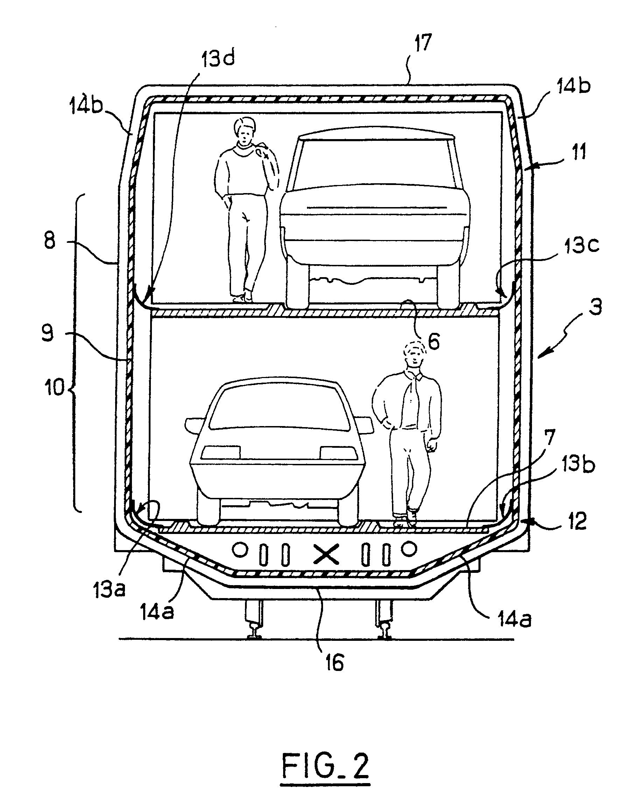

La figure 2 est une vue axiale à travers les véhicules, coupant donc transversalement une membrane élastiquement déformable (3) à travers une onde, par exemple ici intérieure (9). Comme il a été dit l'onde extérieure (8) suit au plus près le gabarit des parois extérieures, en veillant à n'en déborder en aucune circonstance. Afin de dégager au maximum le passage intérieur qui est la raison d'être de ces véhicules, la profondeur totale des ondes de la membrane élastiquement déformable (3) ne pourra guère dépasser douze centimètres. En conséquence, vue en élévation, la membrane élastiquement déformable (3) est formé d'éléments rectilignes verticaux (10) et de parties courbes telles que (11) et (12) (dont la génération est cylindrique autour d'un axe longitudinal) et de section identique à celle des éléments rectilignes verticaux (10). Les éléments rectilignes verticaux (10) prolongeant la face latérale des véhicules ont la plus grande part du poids propre de la membrane à supporter pour éviter une flexion et comporteront donc des renforcements, textiles ou métalliques, continus ou discontinus, incorporés dans l'épaisseur de leur paroi. Avantageusement, la direction préférentielle du renforcement sera oblique mais de faible angle avec la verticale. Dans les déformations d'allongement ou de raccourcissement de la membrane élastiquement déformable (3), dues aux virages et décalages entre les caisses des véhicules, lesdits renforcements joueront le rôle de charnières multiples, s'opposant à l'affaissement sous le poids propre de la membrane élastiquement déformable (3).

Du fait de leur disposition, ces renforcements présentent, en outre, l'avantage d'offrir une protection contre le vandalisme dans les zones accessibles aux passagers.

Il est intéressant de renforcer de même, mais partiellement, les éléments rectilignes obliques (14a) et (14b) ou horizontaux haut et bas (17) et (16), jouant le même rôle de charnières multiples, mais les parties courbes telles que (11) ou (12) seront avantageusement réalisées en composition élastomérique non renforcée, pour permettre des déformations non développables.

En variante, dans l'épaisseur de la paroi, peut être ménagé un rabat de faible hauteur, épousant la forme de la section sensiblement sinusoïdale, auquel viendra se fixer par des moyens démontables tels que oeillets, rivets, collage ou fermeture à glissière, un soufflet déformable qui peut être — mais non nécessairement — identique en (13a), (13b), (13c) ou (13d). Ledit soufflet déformable, réalisé à partir d'une composition élastomérique non renforcée ou à partir de tissus enduits, présente, vers l'extérieur, la forme de la section sensiblement sinusoïdale de la membrane élastiquement déformable (3), sur laquelle il vient se plaquer et, vers l'intérieur, des moyens de fixation sur les planchers (6) et (7) qui assurent le passage avec la déformabilité nécessaire.

La fixation dudit soufflet déformable, sous le rabat de faible hauteur, permet une fermeture pratiquement étanche entre les passages supérieur et inférieur, mais aussi entre ce dernier et la zone sous le plancher (7), où se situent les attelages et les branchements pneumatiques et électriques. Ladite zone, formant un compartiment quasi étanche, évite les risques de remontée d'odeurs d'huile et les projections dues aux fuites accidentelles de canalisations et participe utilement à une insonorisation accrue en direction du train de roulement. Lorsque se produit une dénivellation verticale entre les caisses de deux véhicules consécutifs, du fait de l'affaissement maximum de l'un, la suspension de l'autre restant déchargée, les ondes peuvent prendre une inclinaison sans exercer de rappel élastique trop important.

Au contraire, il est bien évident que la constitution de charnières multiples dans les éléments rectilignes verticaux (10), opposés, avec faible possibilité d'affaissement des ondes, au nombre de six à douze par exemple, donne à leur raideur un bras de levier particulièrement important pour la liaison en roulis de deux caisses de véhicules consécutifs.

Même si l'on rend suffisamment souples les éléments rectilignes horizontaux haut et bas (17) et (16), afin que la liaison transversale entre les caisses de véhicules ne s'oppose pas trop au décalage transversal notable que l'on rencontre au passage de courbe et contrecourbe, il est clair que la rigidité de roulis d'une caisse de véhicule, tournant autour d'un axe longitudinal par rapport au reste du train, doit sa plus grande part à la liaison entre caisses et une part nettement plus faible au rappel différentiel des suspensions.

Le concepteur de l'ensemble de véhicules liés par les membranes déformables, objets de l'invention, devra en tenir d'autant plus compte que le moment d'inertie en roulis des véhicules est très élevé. Le couple de rappel élastique pourra être modulé selon que l'on renforce ou non les éléments rectilignes horizontaux haut et bas (17) et (16) et obliques (14a) et (14b), qui participent très différemment au rappel en roulis suivant la hauteur du centre de roulis à vide ou en charge.

Lors de l'entrée en courbe ou de la sortie vers un alignement, la prise de dévers se transmettra par l'effet de la suspension sur le premier véhicule et la membrane élastiquement déformable participera, par sa raideur et par son amortissement interne contrôlable, de façon majoritaire au confort des véhicules. Les brides de fixation doivent être dimensionnées en conséquence.

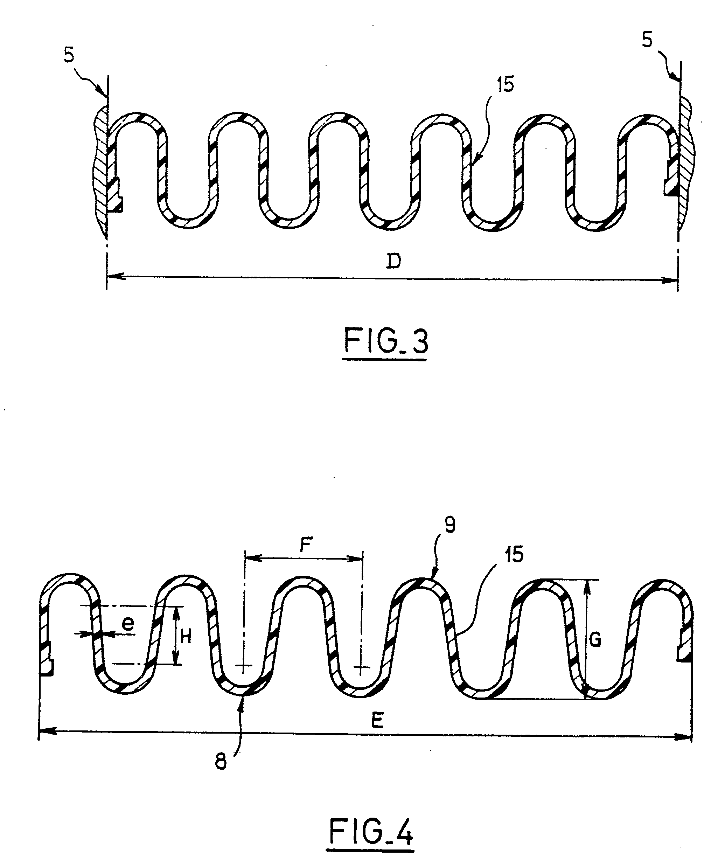

La figure 3 est une section quelconque, orthogonale à la paroi de la membrane élastiquement déformable, valable pour les éléments rectilignes verticaux (10) comme pour les parties courbes telles que (11) et (12) de la vue précédente. La distance indiquée en (D) est l'écartement disponible entre les deux plans d'appui sur les faces planes des véhicules ; elle est obtenue, après attelage, par une compression de l'ordre de 10 à 15% de l'encombrement à l'état libre de la membrane.

La figure 4 est la même section de la membrane élastiquement déformable à l'état libre, par exemple posée sur un seul véhicule désaccouplé. Elle occupe alors un encombrement (E) pour un entraxe (F) entre deux ondes consécutives. On remarquera que la partie plane de la paroi (15), de longueur (H) entre chaque onde, est conçue de façon à se trouver, en position de service, sensiblement parallèle aux plans d'appuis sur les faces des véhicules. Pour cette raison les parois présentent, à l'état libre, une légère pente, la profondeur totale (G) des ondes, représentant l'encombrement de la membrane élastiquement déformable, étant sensiblement égale au pas (F) de leurs entraxes.

L'épaisseur (e) de la paroi, aussi bien dans les ondes intérieures (9) et extérieures (8) que dans les parties planes (15) est sensiblement constante et au moins égale à six millimètres, les rayons intérieurs et extérieurs étant, respectivement, de l'ordre de deux fois et demie et quatre fois cette épaisseur à la position de service. C'est, bien entendu, la variation de ces rayons, par flexion, qui permet les déformations de la membrane, essentiellement développable pour les éléments rectilignes de celle-ci. Pour les parties courbes telles que (11) et (12) de la figure 2, une déformabilité d'ensemble de la paroi est nécessaire et il sera légitime d'utiliser, dans ces zones, une composition élastomérique sans renforcement textile ou métallique.

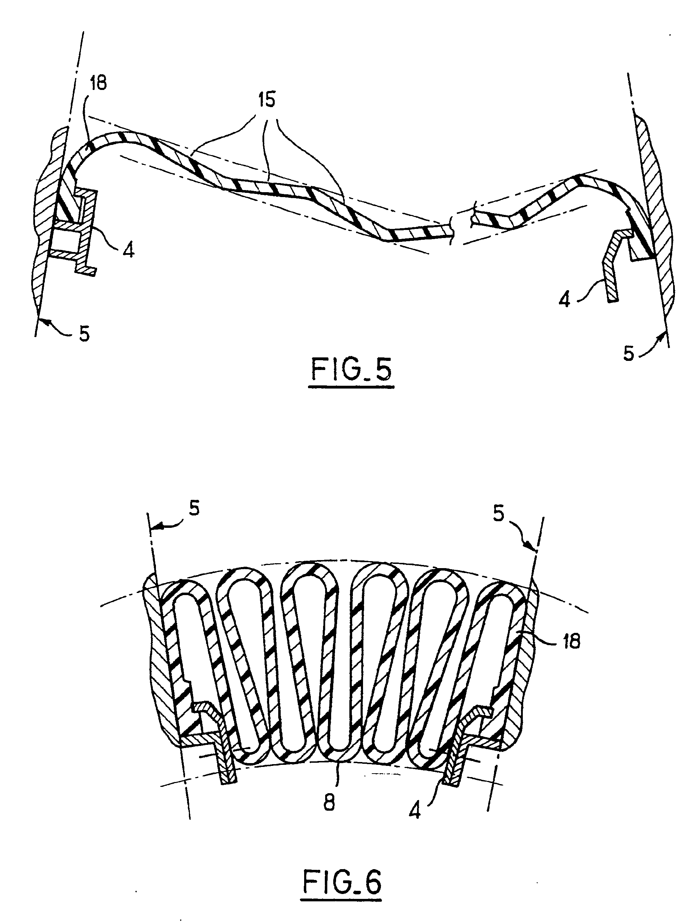

Les figures 5 et 6 représentent les déformations maximales admissibles de la membrane élastiquement déformable montrée à l'état libre en figure 4. En extension, comme illustré sur la figure 5, les parties planes de la paroi (15) ont tendance à s'aligner presque dans le prolongement des parties courbes des ondes. Une réserve de déformabilité des talons (18) pincés par les brides (4), évite un alignement total du matériau qui casserait lesdits talons. A l'autre limite de la course, comme illustré sur la figure 6, un écrasement total des parties courbes au fond des ondes extérieures (8) doit être évité, sous peine de cassure desdites zones.

Dans ces circonstances extrêmes, il se forme, entre les axes des ondes, des angles résultant de la courbure de la trajectoire. Le montage des brides de fixation (4), à l'extérieur du véhicule, s'avère plus favorable au cas du fonctionnement en extension. Au contraire, dans le cas du fonctionnement en compression, il introduit des limitations plus contraignantes.

Un cas intermédiaire, non représenté, se rencontre lors du désaxage maximal entre les caisses des véhicules, dû au passage de courbe et contrecourbe, cas où la membrane élastiquement déformable (3), pour une longueur déployée peu différente de (D) de la figure 3, présente un talon (18) étiré vers l'arrière, comme sur la figure 5, l'autre talon étant comprimé vers l'avant, comme sur la figure 6. Dans ce cas ce sont les cisaillements internes dans les éléments rectilignes horizontaux haut et bas (17) et (16), de la figure 2 qui limitent les performances, en particulier de tenue à la fatigue alternée, et non la géométrie. En effet, de telles sollicitations de cisaillement vont pousser toutes les ondes à basculer, autour d'un axe vertical, dans le sens de la sollicitation et la déformation géométrique n'est limitée, d'un côté, que par l'appui des ondes les unes sur les autres et, à leur autre extrémité, par l'extension maximale de la membrane élastiquement déformable.

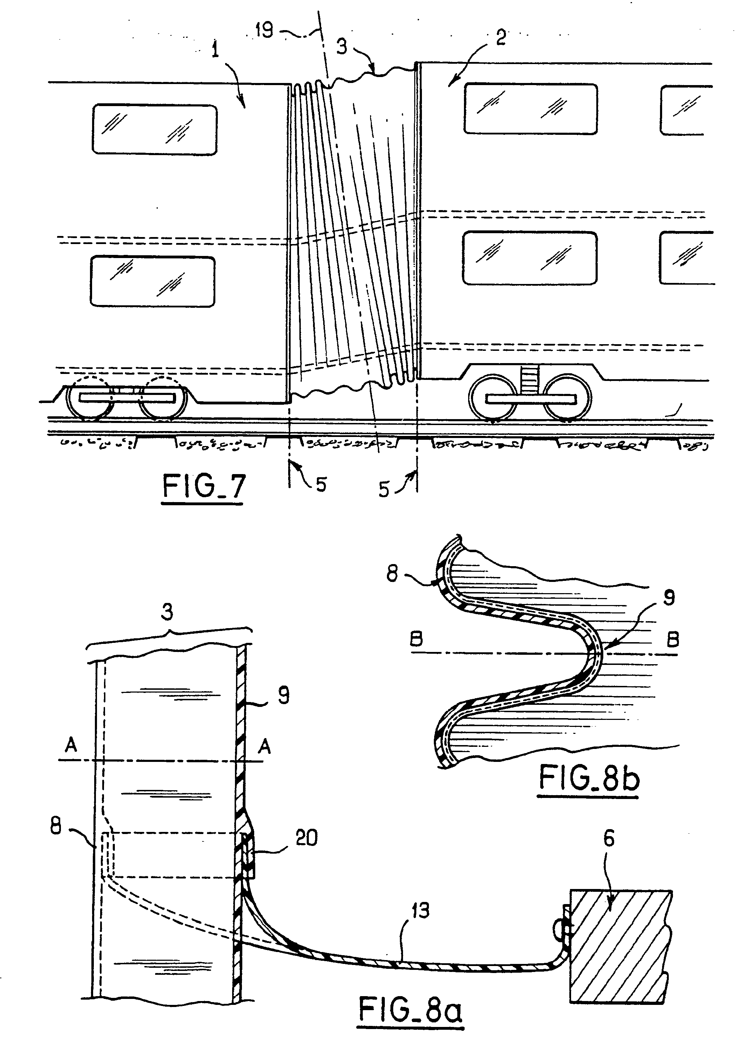

La figure 7 s'inspire de cette dernière observation pour représenter, en vue latérale comme à la vue 1a, une dénivellation verticale entre deux caisses, le véhicule (1) étant affaissé sur ses butées de suspension, le véhicule (2) étant levé, soit à vide, soit par mauvais fonctionnement de ses dispositifs de nivellement.

La figure 7 suppose le parallélisme des faces planes des véhicules, la membrane élastiquement déformable (3) prenant alors l'inclinaison maximale permise par la butée des ondes les unes sur les autres, en haut, du côté affaissé, et, en bas, du côté surélevé. L'onde située dans le plan de symétrie (19) aura l'inclinaison maximale permise par la butée des ondes extrêmes, ainsi que les cisaillements maximaux dans les deux parties planes adjacentes.

Quoique l'affaissement d'une seule suspension soit possible accidentellement, généralement, des moyens techniques appropriés chercheront à éviter l'inclinaison d'un véhicule qui créerait un danger de déplacement des charges.

La figure 8 explicite le mode de fixation d'un soufflet déformable (13), venant s'adapter à la forme de la membrane élastiquement déformable (3), pour assurer une quasi étanchéité entre celle-ci et les planchers déformables tels que (6) entre compartiments de passage.

La vue 8a est un agrandissement de la zone entourant le soufflet déformable (13d) de la figure 2, où la membrane élastiquement déformable (3) est coupée dans un plan transversal au véhicule, en fond d'onde (9). Un rabat (20), de faible hauteur, lié à la paroi uniquement par sa partie supérieure — éventuellement renforcée — est ménagé dans l'épaisseur de la paroi et présente la forme de la section droite de toute la membrane.

La fixation, demeurant déformable le long du rabat (20), peut être, selon les besoins, assurée par un simple clipsage d'un talon dans une gorge conjuguée, un collage du bord du soufflet déformable (13) sous le rabat (20), ou encore un laçage par une cordelette traversant alternativement, par des oeillets, les deux composants (13) et (20). Des boutons pressions sont également possibles aussi bien que des "tourniquets pour bâches" fixés sur le soufflet déformable (13) et traversant les oeillets ovales correspondants, ménagés dans le rabat (20).

La vue 8b est une coupe selon AA de la vue 8a, elle-même coupe selon BB de la vue 8b.

Un mode de fabrication préférentiel, pour la membrane élastiquement déformable, objet de l'invention consiste en la confection et une vulcanisation partielle des éléments rectilignes et des éléments courbes dans des moules appropriés.

La réalisation d'empilages de plis de cablés textiles ou métalliques de renforcement, superposés avec des feuilles de composition élastomérique de liaison et des revêtements, également en composition élastomérique, le plus souvent de formulation différente, est possible du fait du caractère développable des ondes, dans les éléments rectilignes où ces empilages peuvent être placés dans un moule et calés par un bourrage à chaque extrêmité.

La confection des rabats pour fixation des soufflets déformables aura toujours lieu dans des éléments rectilignes. Les parties courbes seront réalisées par galbage de feuilles de composition élastomérique, raccordées aux extrémités des éléments rectilignes, après avivage et, éventuellement, décorticage des renforts, lesdits éléments rectilignes étant déjà pré-vulcanisés et engagés dans un moule de raccordement, ceci autant de fois que nécessaire pour réaliser d'un seul tenant la membrane élastiquement déformable.

Le soufflet déformable est fabriqué en forme, de préférence par vulcanisation d'un tissu enduit, forcé dans un moule approprié, de façon à se plaquer suivant la forme exacte au repos contre la membrane élastiquement déformable. Les extrémités ont des formes également appropriées pour se fixer, d'une part, aux faces rigides des planchers des véhicules, et, d'autre part, à celles des planchers déformables entourés par la membrane.

En conclusion, une membrane élastiquement déformable, monobloc, selon l'invention, apporte à l'industrie des transports la possibilité de relier, d'un seul tenant, deux véhicules consécutifs, en ménageant une section de passage maximale, pratiquement dans le prolongement des parois desdits véhicules. Cette membrane élastiquement déformable, monobloc, d'un montage aisé, protège les passagers et les véhicules transportés contre les intempéries, le souffle dû à la vitesse et le bruit ; elle enferme contre les intempéries et protège contre les émissions d' odeurs intempestives ou les projections accidentelles, l'attelage, les tampons et les canalisations pneumatiques ou électriques et participe, de façon contrôlable, à la liaison élastique de roulis entre les caisses des voitures successives d'un train, destiné au transport de véhicules accompagnés, ou bien d'un métro permettant l'intercirculation des passagers sur toute sa longueur.

## Revendications

1. Membrane élastiquement déformable (3) pour intercirculation entre véhicules successifs, ferroviaires ou routiers, assurant une section de passage maximale dans le prolongement des parois des véhicules auxquels elle est liée par des brides de fixation (4), constituée d'une surface ondulée, formée d'anneaux parallèles, caractérisée en ce qu'elle présente, à l'état libre, une section sensiblement sinusoïdale et qu'elle est partiellement comprimée, lors de la mise en place, entre deux plans d'appui (5) sur les faces planes d'extrêmités des véhicules attelés (1) et (2), de manière à ce que les parties approximativement planes (15) de la membrane demeurent, en service, sensiblement parallèles auxdits plans d'appui (5).

2. Membrane élastiquement déformable (3) pour intercirculation entre véhicules successifs, ferroviaires ou routiers, selon la revendication 1, dont la section transversale est constituée d'éléments rectilignes verticaux (10) et horizontaux haut et bas (17) et (16), caractérisée en ce que lesdits éléments rectilignes sont reliés par des parties courbes telles que (11) et (12), non développables, et par des éléments rectilignes obliques (14a) et (14b).

3. Membrane élastiquement déformable (3) pour intercirculation entre véhicules successifs, ferroviaires ou routiers, selon la revendication 2, caractérisée en ce qu'elle se présente sous une forme monobloc, la paroi étant constituée, dans les éléments rectilignes verticaux (10), d'au moins deux plis croisés de renforcement textile ou métallique, continu ou discontinu, intimement liés à une composition élastomérique, et, dans les parties courbes telles que (11) et (12), de raccordement entre lesdits éléments rectilignes verticaux (10), d'au moins deux couches de compositions élastomériques sans renforcement textile ou métallique, l'épaisseur (e) de l'ensemble de la paroi étant sensiblement constante.

4. Membrane élastiquement déformable (3) pour intercirculation entre véhicules successifs, ferroviaires ou routiers, selon la revendication 3, caractérisée en ce que la composition élastomérique constituant les revêtements de ses faces apparentes, intérieure et extérieure, présente une formulation résistant simultanément au feu, aux intempéries, au vieillissement atmosphérique et aux eaux de lavage.

5. Membrane élastiquement déformable (3) pour intercirculation entre véhicules successifs, ferroviaires ou routiers, selon la revendication 4, caractérisée en ce que la formulation de la composition élastomérique, qui constitue le revêtement comprend un élastomère contenant, dans sa molécule, des atomes d'halogènes, tels que le chlore ou le brome, accroissant la résistance au feu de ladite composition élastomérique, et des charges ignifugeantes telles que les borates, l'oxyde d'antimoine ou l'alumine hydratée.

6. Membrane élastiquement déformable (3) pour intercirculation entre véhicules successifs, ferroviaires ou routiers, selon la revendication 3, caractérisée en ce que la composition élastomérique constituant les couches de liaison, au coeur de la paroi, aussi bien dans les éléments rectilignes verticaux (10) que dans les parties courbes telles que (11) et (12), présente une formulation ne comportant qu'un faible taux de charges renforçantes pour assurer une haute résistance aux fatigues dynamiques alternées et des propriétés d'isolation thermique et phonique.

7. Membrane élastiquement déformable (3) pour intercirculation entre véhicules successifs, ferroviaires ou routiers, selon la revendication 3, dans l'épaisseur constante (e) de la paroi de laquelle est ménagé un rabat (20), de faible hauteur, éventuellement renforcé, caractérisée en ce que s'y raccorde un soufflet déformable (13), comblant l'espace entre ladite membrane élastiquement déformable (3) et les planchers (6) et (7), reliant les planchers des véhicules (1) et (2), assurant, de ce fait, une fermeture pratiquement étanche entre les passages supérieur et inférieur et entre ce dernier et la zone sous le plancher (7).

8. Membrane élastiquement déformable (3) pour intercirculation entre véhicules successifs, ferroviaires ou routiers, selon la revendication 3, caractérisée en ce que l'épaisseur constante (e) de la paroi est au moins égale à six millimètres.

9. Membrane élastiquement déformable (3) pour intercirculation entre véhicules successifs, ferroviaires ou routiers, selon la revendication 3, caractérisée en ce que le couple de rappel élastique entre caisses en roulis comme le rappel élastique en débattement et leur amortissement interne peuvent être contrôlés par la nature et la proportion des renforcements textiles ou métalliques, continus ou discontinus, en particulier dans les éléments rectilignes obliques (14a) et (14b), ainsi que par la formulation des différentes compositions élastomériques.

10. Membrane élastiquement déformable (3) pour intercirculation entre véhicules successifs, ferroviaires ou routiers, selon la revendication 1, caractérisée en ce que la course élastique de compression entre la longueur à l'état libre (D) et l'encombrement en service (E) est d'environ 10 à 15% de ladite longueur à l'état libre (D).

## Patentansprüche

1. Elastisch verformbare Membran (3) zur Durchgangsverbindung zwischen aufeinanderfolgenden Schienen- oder Straßenfahrzeugen, die einen Querschnitt maximalen Durchgangs in der Verlängerung der Seitenwände der Fahrzeuge zur Verfügung stellt, mit denen sie durch Befestigungsklammern (4) verbunden ist und die aus einer aus parallelen Ringen gebildeten, gewellten Fläche besteht, **dadurch gekennzeichnet, daß sie im freien Zustand einen** etwa sinusförmigen Querschnitt aufweist und daß sie bei ihrer Anbringung zwischen zwei Stützebenen (5) an den ebenen Stirnflächen der Enden der zusammengekuppelten Fahrzeuge (1, 2) teilweise zusammengedrückt wird, so daß die näherungsweise ebenen Bereiche (15) der Membran im Betrieb etwa parallel zu den Stützebenen (5) bleiben.

2. Elastisch verformbare Membran (3) zur Durchgangsverbindung zwischen aufeinanderfolgenden Schienen- oder Straßenfahrzeugen nach Anspruch 1, deren transversaler Querschnitt aus vertikalen (10) sowie oben und unten horizontalen (16, 17) geradlinigen Elementen besteht, dadurch gekennzeichnet, daß die besagten geradlinigen Elemente durch nicht abwickelbare gebogene Teile, wie (11) und (12), und durch geradlinige schräggestellte Elemente (14a) und (14b) miteinander verbunden sind.

3. Elastisch verformbare Membran (3) zur Durchgangsverbindung zwischen aufeinanderfolgenden Schienen- oder Straßenfahrzeugen nach Anspruch 2, dadurch gekennzeichnet, daß sie eine einstückige Form aufweist, wobei die Wandung in den geradlinigen vertikalen Elementen (10) aus mindestens zwei sich kreuzenden textilen oder metallischen, kontinuierlichen oder diskontinuierlichen, gedrehten Verstärkungseinlagen, die mit einer elastomeren Zusammensetzung innig verbunden sind, und in den gebogenen Teilen, wie (11) und (12), zur Verbindung zwischen geradlinigen vertikalen Elementen (10) aus mindestens zwei Schichten aus elastomerer Zusammensetzung ohne textile oder metallische Verstärkung besteht und die Dicke (e) des Aufbaus der Wandung etwa konstant ist.

4. Elastisch verformbare Membran (3) zur Durchgangsverbindung zwischen aufeinanderfolgenden Schienen- oder Straßenfahrzeugen nach Anspruch 3, dadurch gekennzeichnet, daß die die Ummantelung ihrer äußeren und inneren sichtbaren Seite bildende elastomere Zusammensetzung gleichermaßen gegen Feuer, Witterung, atmosphärische Alterung und Waschwasser resistente Rezeptur aufweist.

5. Elastisch verformbare Membran (3) zur Durchgangsverbindung zwischen aufeinanderfolgenden Schienen- oder Straßenfahrzeugen nach Anspruch 4, dadurch gekennzeichnet, daß die Rezeptur der die Ummantelung bildenden elastomeren Zusammensetzung ein Elastomer enthält, welches in seinem Molekül Halogenatome wie Chlor oder Brom enthält, welche die Feuerbeständigkeit der elastomeren Zusammensetzung steigern und feuerhemmende Substanzen wie Borate, Antimonoxid oder Aluminiumhydroxid enthält.

6. Elastisch verformbare Membran (3) zur Durchgangsverbindung zwischen aufeinanderfolgenden Schienen- oder Straßenfahrzeugen nach Anspruch 3, dadurch gekennzeichnet, daß die elastomere Zusammensetzung, welche die Verbindungsschichten im Wandlungskern sowohl in den geradlinigen vertikalen Elementen (10) als auch in den gebogenen Teilen, wie (11) und (12), bildet, eine Rezeptur aufweist, welche nur einen geringen Füllstoffanteil enthält, um einen hohen Widerstand gegen dynamische Dauerbiegeermüdung und die Fähigkeit zur thermischen und akustischen Isolation sicherzustellen.

7. Elastisch verformbare Membran (3) zur Durchgangsverbindung zwischen aufeinanderfolgenden Schienen- oder Straßenfahrzeugen nach Anspruch 3, in deren Wand mit der konstanten Dicke (e) eine ggfs. verstärkte Tasche (20) geringer Höhe ausgebildet ist, dadurch gekennzeichnet, daß in diese ein verformbarer Balgen (13) eingepaßt ist, der den Raum zwischen der elastisch verformbaren Membran (3) und den die Böden der Fahrzeuge (1) und (2) verbindenden Böden (6) und (7) ausfüllt und der dadurch einen praktisch dichten Verschluß zwischen dem oberen und unteren Durchgang und zwischen letzterem und dem Bereich unter dem Boden (7) gewährleistet.

8. Elastisch verformbare Membran (3) zur Durchgangsverbindung zwischen aufeinanderfolgenden Schienen- oder Straßenfahrzeugen nach Anspruch 3, dadurch gekennzeichnet, daß die konstante Dicke (e) der Wandung mindestens 6 mm beträgt.

9. Elastisch verformbare Membran (3) zur Durchgangsverbindung zwischen aufeinanderfolgenden Schienen- oder Straßenfahrzeugen nach Anspruch 3, dadurch gekennzeichnet, daß die elastische Rückstellkraft zwischen schlingernden Wagenkästen sowie die elastische Rückstellung beim Durchfedern und deren innere Dämpfung durch die Art und den Anteil der textilen oder metallischen, kontinuierlichen Verstärkungseinlagen, insbesondere in den geradlinigen schräggestellten Elementen (14a) und (14b), sowie durch die Rezeptur der elastomeren Zusammensetzung eingestellt werden kann.

10. Elastisch verformbare Membran (3) zur Durchgangsverbindung zwischen aufeinanderfolgenden Schienen- oder Straßenfahrzeugen nach Anspruch 1, dadurch gekennzeichnet, daß der Kompressionsfederungsweg zwischen der Länge im freien Zustand (D) und dem Platzbedarf im Betrieb (E) ungefähr 10 bis 15% der Länge im freien Zustand (D) ist.

## Claims

1. An elastically deformable membrane (3) for intercirculation between successive rail or road vehicles, ensuring a maximum passage section in the extension of the walls of the vehicles to which it is connected by attachment flanges (4), which membrane is constituted by a corrugated surface, formed of parallel rings, characterized in that it presents, in the free state, a substantially sinusoidal section and that it is partially compressed, on putting it into place, between two support planes (5) on the flat faces of ends of the coupled vehicles (1) and (2), such that the approximately flat parts (15) of the membrane remain, in use, substantially parallel to the said support planes (5).

2. An elastically deformable membrane (3) for intercirculation between successive rail or road vehicles, according to claim 1, the transverse section of which is constituted by vertical rectilinear elements (10) and upper and lower horizontal rectilinear elements (17) and (16), characterized in that the said rectilinear elements are connected by curved parts such as (11) and (12), which are not developable, and by oblique rectilinear elements (14a) and (14b).

3. An elastically deformable membrane (3) for intercirculation between successive rail or road vehicles, according to claim 2, characterised in that it is in one piece, the wall being constituted, in the vertical rectilinear elements (10), by at least two crossed plies of textile or metallic reinforcement, continuous or discontinuous, intimately connected to an elastomeric composition, and, in the curved parts such as (11) and (12), for connection between the said vertical rectilinear elements (10), by at least two layers of elastomeric compositions without textile or metallic reinforcement, the thickness (e) of the whole of the wall being substantially constant.

4. An elastically deformable membrane (3) for intercirculation between successive rail or road vehicles, according to claim 3, characterized in that the elastomeric composition constituting the coverings of its visible interior and exterior faces, has a formulation resistant simultaneously to fire, to bad weather, to atmospheric ageing and to washing water.

5. An elastically deformable membrane (3) for intercirculation between successive rail or road vehicles, according to claim 4, characterized in that the formulation of the elastomeric composition which constitutes the covering comprises an elastomer containing, in its molecule, halogen atoms, such as chlorine or bromine, increasing the fire resistance of the said elastomeric composition, and fireproofing charges such as borates, antimony oxide or hydrated alumina.

6. An elastically deformable membrane (3) for intercirculation between successive rail or road vehicles, according to claim 3, characterized in that the elastomeric composition constituting the connecting layers, at the core of the wall, in the vertical rectilinear elements (1) as well as in the curved parts such as (11) and (12), has a formulation which comprises only a small amount of reinforcing charges to ensure a high resistance to alternate dynamic stresses and properties of thermal and sound insulation.

7. An elastically deformable membrane (3) for intercirculation between successive rail or road vehicles, according to claim 3, in the constant thickness (e) of the wall of which there is arranged a flap (20) of low height, which may be reinforced, characterized in that there is connected thereto a deformable bellows (13), filling the space between the said elastically deformable membrane (3) and the floors (6) and (7), connecting the floors of the vehicles (1) and (2), thereby ensuring a substantially sealed closure between the upper and lower passages and between the latter and the region below the floor (7).

8. An elastically deformable membrane (3) for intercirculation between successive rail or road vehicles, according to claim 3, characterized in that the constant thickness (e) of the wall is at least equal to six millimetres.

9. An elastically deformable membrane (3) for intercirculation between successive rail or road vehicles, according to claim 3, characterized in that the resilient elastic couple between rolling vehicle bodies and likewise the elastic resilience in deflection, and their damping, can be modulated by the nature and proportion of the textile or metallic, continuous or discontinuous reinforcements, in particular in the oblique rectilinear elements (14a) and (14b), as well as by the formulation of the different elastomeric compositions.

10. An elastically deformable membrane (3) for intercirculation between successive rail or road vehicles, according to claim 1, characterized in that the elastic course of compression between the length in the free state (D) and the space occupied in operation (E) is approximately 10 to 15% the said length in free state (D).

FIG_1a

FIG_1b

FIG_2

FIG.3

FIG.4

FIG.5

FIG.6

FIG_7

FIG_8b

FIG_8a

14